(19) Europäisches Patentamt / European Patent Office / Office européen des brevets

(11) **EP 2 212 161 B1**

(12) **EUROPEAN PATENT SPECIFICATION**

(45) Date of publication and mention
of the grant of the patent:
**26.03.2014 Bulletin 2014/13**

(51) Int Cl.:
**B60R 21/01** *(2006.01)*

(21) Application number: **07852179.6**

(22) Date of filing: **28.11.2007**

(86) International application number:
**PCT/SE2007/050907**

(87) International publication number:
**WO 2009/070071 (04.06.2009 Gazette 2009/23)**

(54) **A SAFETY SYSTEM THAT CONTROLS THE RETARDATION FORCE RELATING TO THE STIFFNESS OF THE CHEST**

SICHERHEITSSYSTEM, DAS DIE ZU DER STEIFHEIT DES BRUSTKORBS IN BEZIEHUNG STEHENDE VERZÖGERUNGSKRAFT STEUERT

SYSTÈME DE SÉCURITÉ PERMETTANT DE COMMANDER LA FORCE DE DÉCÉLÉRATION PAR RAPPORT À LA RIGIDITÉ DE LA POITRINE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**04.08.2010 Bulletin 2010/31**

(73) Proprietor: **Autoliv Development AB**
**44783 Vårgårda (SE)**

(72) Inventor: **ARDESHIRI, Tohid**
**SE-583 31 LINKÖPING (SE)**

(74) Representative: **Beattie, Alex Thomas Stewart et al**
**Forresters**
**Skygarden**
**Erika-Mann-Strasse 11**
**80636 München (DE)**

(56) References cited:
EP-A1- 1 695 878        DE-A1- 4 112 579
GB-A- 2 410 593         GB-A- 2 420 610
US-A1- 2005 114 108     US-A1- 2006 097 496
US-A1- 2007 007 066

- VAN DER ZALM, G. M.: ''Reduction of the chest deflection', Eindhoven University of Technology' DEPARTMENT OF MECHANICAL ENGINEERING CONTROL SYSTEMS TECHNOLOGY 2003, DCT-2003.9 2003, pages 1 - 53, XP003023404
- 'Proceedings of the 42nd IEEE, Conference on Decision and control', December 2003, MAUI, HAWAI USA article HESSELING R J ET AL.: 'Identification and Control for future Restraint Systems', pages 2780 - 2785, XP010685620

EP 2 212 161 B1

## Description

Description of Invention

THIS INVENTION relates to a safety system, and in particular concerns a safety system for protecting a vehicle occupant in the event of a crash.

When a vehicle is involved in a crash, for instance, a head-on crash, the forces acting on the chest of an occupant are often the cause of injuries. These forces may be exerted on the occupant's chest by vehicle systems which are attempting to protect the occupant, for instance a seat belt and/or an air-bag.

The force that is applied to an occupant's chest by a seat belt or air-bag can, in certain circumstances, be tuned. In the case of a seat belt, the tuning of the force applied to the occupant may be achieved by varying the force level of a force limiter for the belt. In the case of an air-bag, the venting of the air-bag and/or the deployment pressure of the air-bag may be varied.

Ideally, the retardation of the occupant should be as gentle as possible, whilst still avoiding the occupant striking the steering wheel or dashboard of the vehicle. The retarding forces applied by the seat belt and/or air-bag should therefore be varied in accordance with the mass of the occupant, and the severity of the crash. For a heavy occupant and/or a severe crash, large retarding forces are required. For a light occupant or a less severe crash, lower retarding forces should be applied. Such a vehicle safety system is disclosed in DE 4112579A.

It is an object of the present invention to seek to provide an improved vehicle safety system of this type.

Accordingly, one aspect of the present invention provides a vehicle safety system, comprising: at least one restraining device operable to apply a restraining force to the chest of an occupant when it is determined that the vehicle is involved in a crash situation; and a control unit operable to control the restraining force applied by the at least one restraining device to the chest of an occupant in accordance with a property of the chest of the occupant, relating to the stiffness of the chest.

Advantageously, a model of the chest of the occupant is used by the control unit, comprising a chest mass representing the chest of the occupant and a chest spring representing the stiffness of the chest of the occupant.

Preferably, the model further comprises a damper provided in parallel with the chest spring.

Conveniently, the property comprises the ratio between the spring constant of the chest spring and the chest mass.

Advantageously, the property comprises the resonant frequency of the chest mass and chest spring.

Preferably, the model uses default values for the chest mass and the spring constant of the chest spring.

Conveniently, the model includes amass derived from the mass of the occupant.

Advantageously, the occupant mass is derived from measuring the weight of the occupant.

Preferably, the spring constant of the chest spring is determined during a pretensioning phase of a seat belt, taking into account the rate of rotation of a spool of the seat belt during the pretensioning phase.

Conveniently, the model further comprises a breast mass, representing the mass of the breast of the occupant, which is connected to the chest spring.

Advantageously, the model further comprises a webbing mass, corresponding to the mass of the webbing of a seat belt positioned across the occupant's chest, the webbing mass being connected to the breast mass by a breast spring having a spring constant representing the stiffness of the occupant's breast.

Preferably, the spring constant of the breast spring is determined by measuring the amount by which a seat belt of the vehicle is retracted during a pre-pretensioning phase.

Conveniently, the model further comprises a webbing spring having a spring constant representing the stiffness of the webbing.

Advantageously, the model or the chest of the occupant is used by the control unit comprising an equivalent chest mass, representing the chest of the occupant and at least one of the breast of the occupant and the mass of webbing of a seat belt position across the occupant's chest, and an equivalent spring having an equivalent spring constant representing the stiffness of the chest of the occupant and at least one of the stiffness of the breast of the occupant and the stiffness of the webbing.

Preferably, the model is created by a Kalman filter.

Conveniently, an input of the model is the acceleration of the sternum of the vehicle occupant, calculated from vehicle acceleration and motion of a seat belt of the vehicle.

Advantageously, an output of the model is the deflection of the chest of the vehicle occupant.

Preferably, an output of the model comprises the acceleration of the occupant's spine.

Conveniently, an output of the model comprises the rate of deflection of the chest of the vehicle occupant.

Advantageously, the force applied to the chest of the occupant in a crash situation by one or more safety systems is controlled in accordance with the output of the model.

Preferably, the vehicle safety systems include a seat belt.

Conveniently, the vehicle safety systems include an air-bag.

Advantageously, the property is the stiffness of the chest.

In order that the present invention may be more readily understood, embodiments thereof will now be described, by way of example, in which:

Figure 1 shows a schematic view of components of a system embodying the present invention; and

Figures 2 and 3 are schematic views of components of a model that may be used with the system embodying the present invention.

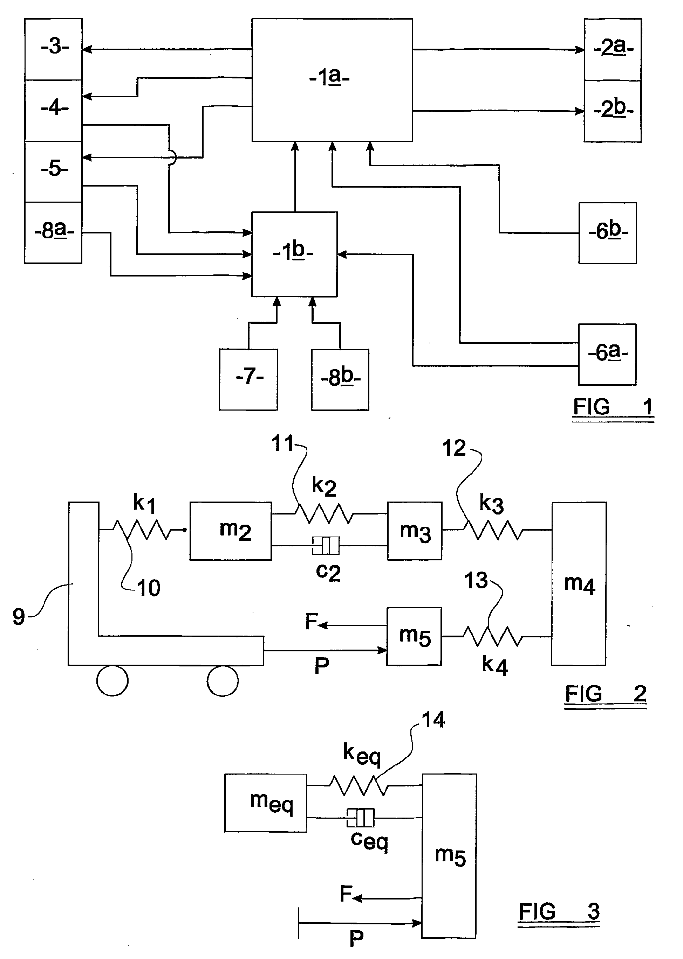

Referring firstly to figure 1, a schematic view is shown of vehicle systems in accordance with the present invention. A control unit 1a is operable to control the deployment of an air-bag 2a, a seat belt pretensioner 4, a belt force limiter 3 and also an airbag force limiter 2b. A seat belt pre-pretensioner 5 may also be provided, as will be understood by those of skill in the art.

The control unit la also receives information from one or more crash sensors, like a comportment acceleration sensor 6a and a pre-crash sensor 6b, and from a chest model processor 1b. The chest model processor 1b in turn receives information from the compartment acceleration sensor 6a and a belt motion sensor 8a, to detect the amount by which the seat belt is extended. Alternatively, or in addition, a distance sensor 8b, which is preferably ultrasonic, may be provided to determine the distance of the occupant from a fixed part of the vehicle, and hence gauge the position of the occupant. Also a weight sensor 7, which senses the weight of an occupant of a seat, may be used.

When it is determined by the pre-crash sensor 6b that the vehicle is likely to be involved in a crash situation or that a crash situation is occurring, the pre-pretensioner 5, the pretensioner 4 and the air-bag 2a may be activated to protect the vehicle occupant. As discussed above, the aim is to decelerate the occupant in the gentlest manner possible, bringing the occupant to a stop just before the occupant makes contact with the dashboard or steering wheel of the vehicle. In order to gauge the retarding force which should be applied to the occupant, information may be gathered from the crash sensors 6a and b, to obtain a determination as to the severity of the crash, the weight sensor 7, (if such a sensor is provided) to gauge the weight of the occupant, and the belt motion sensor 8a, to determine the present position and motion of the occupant, and hence the distance that the occupant can travel before contacting the steering wheel or dashboard.

Conventional methods control the retardation so that the acceleration of the front part of the occupant's chest (i.e. the sternum) decelerates in the gentlest possible manner, but assumes that the occupant's chest is rigid.

However, in reality this is not the case. Real occupants will have chests with varying stiffness, and will also have relatively soft breast regions (again having varying stiffness) between the occupant's sternum and the front of the occupant's chest which will include, for example, body tissue and clothing.

Variations in chest stiffness (i.e. ribcage stiffness) mean that the ideal retarding force for a particular crash will not be the same for every individual.

The presence of this relatively soft breast region may also influence the ideal retarding force which should be applied to the occupant in the event of a crash. For instance, in the case of an overweight seat occupant who has a relatively large region of body tissue between his sternum and the front of his chest, for the first part of the motion of the occupant during a crash the relatively soft region between the sternum and the front of the chest will be compressed under the force provided by the seat belt and/or air-bag, but the mass of the chest (which is regarded as being fixed to the spine) will continue forward against the resilient force of the ribs, leading to compression of the chest (i.e. deflection of the sternum relative to the spine). This will cause a large acceleration of the chest mass (and spine), which may give rise to excessive injury.

Different criteria are used to gauge the severity of an injury which occurs in this way. An important criterion is based on chest deflection, i.e. how much the chest has been compressed, or the change of distance between the sternum and a point on the thoracic spine. Other criteria for gauging the severity of injury may be based on the acceleration of the thoracic spine, or the rate of chest deflection. For any of these criteria, a more accurate determination may be made by using a non-rigid chest model 1b for calculating the motion of the mass of the chest. Still better determinations may be achieved by allowing for the presence of a relatively soft region between the occupant's sternum and the front of the occupant's chest, as this will influence the ideal retarding force that should be applied in the event of a crash, to minimise the severity the injury. The model may be further improved by taking into account variations in these properties between individuals.

In order to take account of this, in accordance with the present invention, a restraining force which is applied to the chest of an occupant by one or more restraining devices is controlled in response to a property of the chest which relates to the stiffness of the occupant's chest.

The property may be the chest stiffness itself, which can be estimated for a particular individual, as will be explained in more detail below. Alternatively, a default value for chest stiffness may be used.

In preferred embodiments, the chest of a vehicle occupant is modelled by assuming that the chest of the occupant may be represented by a chest mass, corresponding to the mass of the occupant's upper body, excluding the occupant's sternum and breast. The chest mass is considered to be connected to an object which exerts a force on the occupant's chest, e.g. an air-bag or seat belt, by a chest spring, having a spring constant which represents the stiffness of the occupant's chest (i. e. the stiffness of the occupant's ribcage).

When taking into account the effect on the occupant of the forces acting on the occupant during a crash, the deflection of the sternum relative to the chest mass can be taken into account in determining the deflection of the chest, and also other properties such as acceleration of the thoracic spine.

In further embodiments, the model can be extended to comprise a damper, provided in parallel with the chest spring.

The model may assume that the mass of the occupant's chest is split up into several different masses, in series, with different springs being provided between the masses.

With reference to figure 2, a schematic view is shown representing this model. A trolley 9 is shown representing the car body and seat containing the occupant, with this trolley undergoing an acceleration a (detected by the compartment acceleration sensor 6a). An occupant chest mass $m_2$, representing the occupant's body mass excluding the breast and sternum, is attached to the trolley 9 by a first spring 10, having a spring constant $k_1$ representing the stiffness of the backrest of the vehicle seat. The chest mass $m_2$ may be calculated from information output by the weight sensor 7.

A breast mass $m_3$, representing the mass of the breast and sternum, is connected to the chest mass $m_2$ by a second spring 11 having a spring constant $k_2$ representing the stiffness of the rib cage of the occupant.

A webbing mass $m_4$ is provided, connected to the breast mass $m_3$ by a third spring 12 having a spring constant $k_3$ representing the breast stiffness of the occupant.

Finally, an inertial mass $m_5$, corresponding to the inertia of the spindle of the seat belt, is connected to the webbing mass $m_4$ by a fourth spring 13, having a spring constant $k_4$ representing the stiffness of the webbing. The purpose of the inclusion of the inertial mass in the model is explained below

Using the above model it will be understood that, by calculating the deflection of the chest mass $m_2$ with respect to the sternum (i.e. $m_3$), the actual deflection of the sternum of the occupant can be calculated when restraining forces are applied to the occupant's chest, in a crash situation. By calculating the deflection of the webbing mass $m_4$, or the breast mass $m_3$, the total chest deflection may be determined.

In embodiments of the invention, the chest mass $m_2$ and the spring constants may be assumed to be standard values, which can, for example, be calculated from measuring a cross-section of likely vehicle occupants.

In preferred embodiments, however, the chest mass $m_2$, and spring constants for a particular vehicle occupant, are estimated from measurements relating to that occupant.

In the above embodiment, the vehicle includes a pretensioner 4, to provide a higher retracting force for the occupant's seat belt after a crash has begun, and a pre-pretensioner 5, which provides a lower retracting force before the impact begins, to reduce "slack" in the seat belt before the higher force is applied by the pretensioner 4. In this case, the pre-pretensioner 5 may be used to estimate the breast stiffness of the occupant, and the pretensioner 4 could be used to estimate the chest stiffness of the occupant. The chest stiffness of the occupant may be assigned to one of a plurality of pre-set stiffness classifications.

When the pre-pretensioner 5 is activated, the force with which the seat belt is retracted is known. The distance by which the seat belt retracts under this known force may be measured, and therefore an estimate of the occupant's breast stiffness may be obtained. It will be appreciated that the greater the amount by which the seat belt is retracted under a known force, the lower the stiffness of the occupant's breast region. Once again, the occupant may be classified as being in one of a plurality of pre-set breast stiffness categories.

When the pretensioner 4 is activated, there will inevitably still be some "slack" in the seat belt. The force that is applied to the seat belt by the pretensioner is known, and the rate of rotation of the spool of the scat belt may also be measured.

When the pretensioner is first activated, the rate of rotation of the spindle will increase sharply, as the slack is taken up and there is relatively little resistance to the increasing angular speed of the spool (in figure 2, P represents the payout of the belt). However, when the seat belt couples to the occupant, the rate of rotation of the spool will decrease sharply until the rate of angular rotation reaches zero. The rate of decrease of the spool's angular speed can be used to make a determination as to the chest stiffness of the occupant.

To return to the model shown in figure 2, in a crash the car body 9 will accelerate towards the left, disconnecting spring $k_1$ from mass $m_2$ and pulling mass $m_5$ with a force F. Gradually the masses $m_5$ to $m_2$ will also start to accelerate towards the left during extension of spring $k_4$ and compression for the springs $k_3$ and $k_2$.

Using information relating to the equivalent model for an occupant's chest, the forces applied to the chest of the occupant during a crash situation can be controlled. In particular, the force level of the belt force limiter 3 and/or the venting 2b of the air-bag 2a, may be controlled so that the chest deflection of the occupant does not exceed a predetermined threshold. As discussed above, thresholds relating to other criteria may be used, for instance the acceleration of the thoracic spine may not exceed a particular threshold, or the rate of chest deflection may not exceed a certain threshold.

One or more properties of the occupant's chest may be measured and this information used to determine, at least partially, the force applied to the occupant's chest by one or more vehicle safety systems. This property may simply comprise the chest stiffness of the occupant. The properties may also comprise the ratio between the spring constant of the chest spring and the chest mass.

Alternatively, the property may comprise the resonant frequency of the chest model, which may be

expressed as $\left(\dfrac{1}{2\pi}\sqrt{\dfrac{k_2}{m_2}}\right)$.

The skilled person will understand that other properties may also be usefully considered.

A simplified version of the model may be constructed by ignoring the breast and webbing masses $m_3$, $m_4$, and their associated springs 12,13, and simply using the chest mass $m_2$ and the spring 11 representing the chest stiffness.

With regard to figure 3, however, an intermediate model may be constructed in which the chest mass $m_2$, and at least one of the breast and webbing masses $m_3$, $m_4$, and the springs 11,12,13 associated with these masses, are represented by a single equivalent mass $m_{eq}$ and a single equivalent spring 14 having an equivalent spring constant $k_{eq}$.

Optionally, an equivalent damper $c_{eq}$ may be provided in parallel with the equivalent spring 14.

It is expected that the equivalent mass $m_{eq}$ and the equivalent spring 14 will have properties similar to the chest mass $m_2$ and the spring 11 which represents the chest stiffness, but these values will be altered to make the behaviour of the model as close as possible to that of the more complex model shown in figure 2.

It will be appreciated that embodiments of the present invention allow a system in which the forces applied to an occupant during a crash by restraining devices are controlled to be tailored to the needs of the individual, which is likely to reduce the severity of any injuries sustained during the crash.

When used in this specification and claims, the terms "comprises" and "comprising" and variations thereof mean that the specified features, steps or integers are included. The terms are not to be interpreted to exclude the presence of other features, steps or components.

## Claims

1. A vehicle safety system, comprising:

   at least one restraining device (2,4) operable to apply a restraining force to the chest of an occupant when it is determined that the vehicle is involved in a crash situation; and
   a control unit (1) operable to control the restraining force applied by the at least one restraining device (2,4) to the chest of an occupant in accordance with a property of the chest of the occupant, relating to the stiffness of the chest.

2. A safety system according to claim 1, wherein a model of the chest of the occupant is used by the control unit (1), comprising a chest mass representing the chest of the occupant and a chest spring representing the stiffness of the chest of the occupant.

3. A system according to claim 2, wherein the property comprises the ratio between the spring constant of the chest spring and the chest mass.

4. A system according to claim 3, wherein the property comprises the resonant frequency of the chest mass and chest spring.

5. A system according to any one of claims 2 to 4, wherein the spring constant of the chest spring is determined during a pretensioning phase of a seat belt, taking into account the rate of rotation of a spool of the seat belt during the pretensioning phase.

6. A system according to any one of claims 2 to 5, when the model further comprises a breast mass, representing the mass of the breast of the occupant, which is connected to the chest spring.

7. A system according to claim 6, wherein the model further comprises a webbing mass, corresponding to the mass of the webbing of a seat belt positioned across the occupant's chest, the webbing mass being connected to the breast mass by a breast spring having a spring constant representing the stiffness of the occupant's breast.

8. A system according to claim 7, wherein the spring constant of the breast spring is determined by measuring the amount by which a seat belt of the vehicle is retracted during a pre-pretensioning phase.

9. A system according to claim 7 or 8, wherein the model further comprises a webbing spring having a spring constant representing the stiffness of the webbing.

10. A system according to claim 1, wherein the model of the chest of the occupant is used by the control unit (1) comprising an equivalent chest mass, representing the chest of the occupant and at least one of the breast of the occupant and the mass of webbing of a seat belt position across the occupant's chest, and an equivalent spring having an equivalent spring constant representing the stiffness of the chest of the occupant and at least one of the stiffness of the breast of the occupant and the stiffness of the webbing.

11. A system according to any one of claims 2 to 11, wherein an input of the model is the acceleration of the sternum of the vehicle occupant, calculated from vehicle acceleration and motion of a seat belt of the vehicle.

12. A system according to any one of claims 2 to 11, wherein an output of the model is the deflection of the chest of the vehicle occupant.

13. A system according to any one of claims 2 to 12, wherein an output of the model comprises the acceleration of the occupant's spine.

14. A system according to any one of claims 2 to 13, wherein an output of the model comprises the rate of deflection of the chest of the vehicle occupant.

15. A system according to any one of claims 2 to 14, wherein the force applied to the chest of the occupant in a crash situation by one or more safety systems (2,4) is controlled in accordance with the output of the model.


**Patentansprüche**

1. Fahrzeugsicherheitssystem, umfassend:

   zumindest eine Rückhaltevorrichtung (2, 4), die betriebsfähig ist, eine Rückhaltekraft an den Brustkorb eines Insassen anzulegen, wenn bestimmt wird, dass das Fahrzeug in eine Unfallsituation verwickelt ist; und
   eine Steuereinheit (1), die betriebsfähig ist, die Rückhaltekraft, die durch die zumindest eine Rückhaltevorrichtung (2, 4) an den Brustkorb eines Insassen angelegt wird, entsprechend einer Eigenschaft des Brustkorbs des Insassen betreffend die Steifheit des Brustkorbs zu steuern.

2. Sicherheitssystem nach Anspruch 1, wobei ein Modell des Brustkorbs des Insassen von der Steuereinheit (1) verwendet wird, umfassend eine Brustkorbmasse, die den Brustkorb des Insassen darstellt, und eine Brustkorbfeder, die die Steifheit des Brustkorbs des Insassen darstellt.

3. System nach Anspruch 2, wobei die Eigenschaft das Verhältnis zwischen der Federkonstante der Brustkorbfeder und der Brustkorbmasse umfasst.

4. System nach Anspruch 3, wobei die Eigenschaft die Resonanzfrequenz der Brustkorbmasse und der Brustkorbfeder umfasst.

5. System nach einem der Ansprüche 2 bis 4, wobei die Federkonstante der Brustkorbfeder während einer Vorspannungsphase eines Sitzgurts bestimmt wird, wobei die Drehrate einer Spule des Sitzgurts während der Vorspannungsphase berücksichtigt wird.

6. System nach einem der Ansprüche 2 bis 5, wobei das Modell ferner eine Brustmasse umfasst, die die Masse der Brust des Insassen darstellt, die mit der Brustkorbfeder verbunden ist.

7. System nach Anspruch 6, wobei das Modell ferner eine Gurtbandmasse umfasst, die der Masse des Gurtbands eines Sitzgurts entspricht, der über den Brustkorb des Insassen positioniert ist, wobei die Gurtbandmasse mit der Brustmasse durch eine Brustfeder verbunden ist, die eine Federkonstante aufweist, die die Steifheit der Brust des Insassen darstellt.

8. System nach Anspruch 7, wobei die Federkonstante der Brustfeder durch Messen des Betrags bestimmt wird, um welchen ein Sitzgurt des Fahrzeuges während einer Vor-Vorspannungsphase zurückgezogen wird.

9. System nach Anspruch 7 oder 8, wobei das Modell ferner eine Gurtbandfeder umfasst, die eine Federkonstante aufweist, die die Steifheit des Gurtbands darstellt.

10. System nach Anspruch 1, wobei das Modell des Brustkorbs des Insassen von der Steuereinheit (1) verwendet wird, umfassend eine Äquivalenz-Brustkorbmasse, die den Brustkorb des Insassen und zumindest eines der Brust des Insassen und der Masse des Gurtbands einer Sitzgurtposition über den Brustkorb des Insassen darstellt, und eine Äquivalenzfeder, die eine Äquivalenzfederkonstante aufweist, die die Steifheit des Brustkorbs des Insassen und zumindest eines der Steifheit der Brust des Insassen und der Steifheit des Gurtbands darstellt.

11. System nach einem der Ansprüche 2 bis 11, wobei eine Eingabe des Modells die Beschleunigung des Brustbeins des Fahrzeuginsassen ist, berechnet aus der Fahrzeugbeschleunigung und einer Bewegung des Sitzgurts des Fahrzeugs.

12. System nach einem der Ansprüche 2 bis 11, wobei eine Ausgabe des Modells die Auslenkung des Brustkorbs des Fahrzeuginsassen ist.

13. System nach einem der Ansprüche 2 bis 12, wobei eine Ausgabe des Modells die Beschleunigung der Wirbelsäule des Insassen umfasst.

14. System nach einem der Ansprüche 2 bis 13, wobei eine Ausgabe des Modells die Auslenkungsrate des Brustkorbs des Fahrzeuginsassen umfasst.

15. System nach einem der Ansprüche 2 bis 14, wobei die Kraft, die an den Brustkorb des Insassen in einer Unfallsituation durch eines oder mehrere Sicherheitssysteme (2, 4) angelegt wird, entsprechend der Ausgabe des Modells gesteuert wird.

**Revendications**

1. Système de sécurité pour véhicule, comprenant :

   au moins un dispositif de retenue (2, 4) utilisable pour appliquer une force de retenue sur le buste d'un passager quand il est déterminé que le véhicule est impliqué dans une situation de collision ; et
   une unité de commande (1) utilisable pour commander la force de retenue appliquée par le ou les dispositifs de retenue (2, 4) au buste d'un passager en fonction d'une propriété du buste du passager concernant la rigidité du buste du passager.

2. Système de sécurité selon la revendication 1, dans lequel l'unité de commande (1) utilise un modèle du buste du passager comprenant une masse de buste représentant le buste du passager et un ressort de buste représentant la rigidité du buste du passager.

3. Système selon la revendication 2, dans lequel la propriété comprend le ratio entre la constante élastique du ressort de buste et la masse du buste.

4. Système selon la revendication 3, dans lequel la propriété comprend la fréquence de résonance de la masse de buste et du ressort de buste.

5. Système selon l'une quelconque des revendications 2 à 4, dans lequel la constante élastique du ressort de buste est déterminée pendant une phase de prétensionnement d'une ceinture de sécurité, en tenant compte de la vitesse de rotation d'un enrouleur de la ceinture de sécurité pendant la phase de prétensionnement.

6. Système selon l'une quelconque des revendications 2 à 5, dans lequel le modèle comprend également une masse de poitrine, représentant la masse de la poitrine du passager, qui est raccordée au ressort de buste.

7. Système selon la revendication 6, dans lequel le modèle comprend également une masse de sangle, correspondant à la masse de la sangle d'une ceinture de sécurité positionnée en travers du buste du passager, la masse de sangle étant raccordée à la masse du buste par un ressort de buste ayant une constante élastique représentant la rigidité du buste du passager.

8. Système selon la revendication 7, dans lequel la constante élastique du ressort de buste est déterminée en mesurant la quantité de rétraction d'une ceinture de sécurité du véhicule pendant une phase de prétensionnement.

9. Système selon la revendication 7 ou la revendication 8, dans lequel le modèle comprend également un ressort de sangle ayant une constante élastique représentant la rigidité de la sangle.

10. Système selon la revendication 1, dans lequel le modèle du buste du passager est utilisé par l'unité de commande (1) comprenant une masse de buste équivalente, représentant le buste du passager et l'une au moins parmi la poitrine du passager et la masse de la sangle d'une position de ceinture de sécurité en travers du buste du passager, et un ressort équivalent ayant une constante élastique équivalente représentant la rigidité du buste du passager et l'une au moins parmi la rigidité du buste du passager et la rigidité de la sangle.

11. Système selon l'une quelconque des revendications 2 à 11, dans lequel une entrée du modèle est l'accélération du sternum du passager du véhicule, calculée à partir de l'accélération du véhicule et du mouvement d'une ceinture de sécurité du véhicule.

12. Système selon l'une quelconque des revendications 2 à 11, dans lequel une sortie du modèle est la déformation du buste du passager du véhicule.

13. Système selon l'une quelconque des revendications 2 à 12, dans lequel une sortie du modèle comprend l'accélération de la colonne vertébrale du passager.

14. Système selon l'une quelconque des revendications 2 à 13, dans lequel une sortie du modèle comprend le taux de déformation du buste du passager du véhicule.

15. Système selon l'une quelconque des revendications 2 à 14, dans lequel la force appliquée au buste du passager dans une situation d'accident par un ou plusieurs systèmes de sécurité (2, 4) est commandée en fonction de la sortie du modèle.

EP 2 212 161 B1

FIG 1

FIG 2

FIG 3

8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4112579 A